# EUROPÄISCHE PATENTSCHRIFT

(11) **EP 3 362 713 B1**
(45) Veröffentlichungstag und Bekanntmachung des Hinweises auf die Patenterteilung: **28.08.2019**
(21) Anmeldenummer: 16791323.5
(22) Anmeldetag: 12.10.2016
(51) Int. Cl.: F16K 15/02, F04B 39/10

(54) **POPPETVENTIL**
POPPET VALVE
SOUPAPE-CHAMPIGNON

(30) Priorität: 12.10.2015 EP 15189428
(43) Veröffentlichungstag der Anmeldung: 22.08.2018
(73) Patentinhaber: Burckhardt Compression AG, 8404 Winterthur (CH)
(72) Erfinder: SCHULZ, Reiner, 79807 Lottstetten (DE)
(74) Vertreter: Dr. Graf & Partner AG
(86) Internationale Anmeldenummer: PCT/EP2016/074520
(87) Internationale Veröffentlichungsnummer: WO 2017/064150

(56) Entgegenhaltungen:
- EP-A1- 2 703 647
- EP-A2- 1 245 881
- AT-B- 412 302
- DE-A1-102007 016 898
- DE-A1-102010 039 516
- GB-A- 500 420
- US-A- 3 336 942

## Beschreibung

Die Erfindung betrifft ein Poppetventil für einen Kolbenkompressor sowie einen Kolbenkompressor mit einem derartigen Poppetventil.

### Stand der Technik

Die Druckschrift DE466976 offenbart in Abbildung 1 ein Tellerventil mit Schraubenfeder, wobei dieses Ventil besonders geeignet ist für die Förderung von sandhaltigem und stark verunreinigtem Wasser. Dieses Ventil weist den Nachteil auf, dass es für eine Förderung von dünnflüssigen oder gasförmigen Fluiden nicht geeignet ist, insbesondere dann, wenn das durch das Ventil strömende Fluid noch eine höhere Strömungsgeschwindigkeit aufweist. Dieses bekannte Tellerventil, betrieben mit einem gasförmigen Fluid, weist die Nachteile auf, dass am Tellerventil ein relativ hoher Druckverlust auftritt. Zudem führt der Ventilteller, sobald dieser geöffnet ist, eine Flatterbewegung aus, und schlägt ständig an der Sitzfläche an. Um den Druckverlust des Tellerventils zu reduzieren besteht die Möglichkeit den Spalt zu vergrössern, indem die Feder, welche den Ventilteller hält, verlängert wird. Dies hat jedoch zur Folge, dass eine noch intensivere Flatterbewegung entsteht, und der Ventilteller entsprechend häufig und heftig an der Sitzfläche anschlägt, sodass dieses Tellerventil einen relativ hohen Verschleiss aufweist.

Das Dokument EP2703647A1 offenbart ein Poppetventil mit einer Mehrzahl von Einlasskanälen, wobei jedem Einlasskanal ein Schliesselement zugeordnet ist. Nachteilig an diesem Poppetventil sind die relativ hohe Bauhöhe, der relative grosse Verschleiss, der relativ hohe Strömungswiderstand, und die relativ grosse Trägheit der Schliesselemente.

### Darstellung der Erfindung

Aufgabe der Erfindung ist es, ein Poppetventil für einen Kolbenkompressor auszugestalten, das vorteilhaftere Betriebseigenschaften aufweist.

Diese Aufgabe wird gelöst mit einem Poppetventil aufweisend die Merkmale von Anspruch 1. Die Unteransprüche 2 bis 18 betreffen weitere, vorteilhafte Ausgestaltungen der Erfindung.

Die Aufgabe wird insbesondere gelöst mit einem Poppetventil für einen Kolbenkompressor, umfassend einen Ventilkörper, vorzugsweise ausgestaltet als Ventilsitzdeckel, wobei im Ventilkörper eine Mehrzahl von Einlasskanälen angeordnet ist, wobei der Einlasskanal einen Eingangsabschnitt sowie einen Ausgangsabschnitt aufweist, wobei der Ausgangsabschnitt in einen Ventilsitz mündet, wobei jedem Einlasskanal ein Schliesselement sowie eine Feder zugeordnet ist, wobei das Schliesselement in einer axialen Richtung beweglich ist, und wobei zu jedem Ventilsitz das zugeordnete Schliesselement in axialer Richtung gegenüber liegend angeordnet ist, derart, dass der Ventilsitz durch das Schliesselement verschliessbar ist, wobei die Feder einen ersten Federendabschnitt sowie einen zweiten Federendabschnitt aufweist, wobei die Feder im Einlasskanal angeordnet ist, wobei der erste Federendabschnitt am Einlasskanals, vorzugsweise am Eingangsabschnitt des Einlasskanals gehalten ist, und vorzugsweise an diesem anliegt, und wobei der zweite Federendabschnitt mit dem Schliesselement verbunden ist, um auf das Schliesselement eine zum Ventilsitz hin ausgerichtete Vorspannkraft zu bewirken.

Das erfindungsgemässe Poppetventil weist ein Schliesselement auf, das während dem Betrieb weitgehend in definierten Lagen bewegt wird, sodass das Schliesselement beim Schliessen mit äusserst geringer Wahrscheinlichkeit mit einer Kante am Ventilsitz aufschlägt. Zudem wird eine Flatterbewegung vermieden. Das erfindungsgemässe Poppetventil weist daher während dem Betrieb einen sehr geringen Verschleiss auf. Zudem kann das Schliesselement sehr massenarm beziehungsweise relativ leicht ausgestaltet sein, was den Verschleiss insbesondere am Ventilsitz zusätzlich reduziert. Das Poppetventil umfasst eine im Eingangskanal des Ventilkörpers angeordnete Feder, an welcher das Schliesselement befestigt ist. Vorteilhafterweise ist das Schliesselement mittig von der Feder gehalten, was die Wahrscheinlichkeit einer Verschwenkung während dem Betrieb reduziert. Vorteilhafterweise sind die Feder und der Eingangskanal derart gegenseitig angepasst ausgestaltet, dass die Feder bei maximaler Auslenkung des Schliesselementes gegen den Ventilsitz hin am Eingangskanal anliegt, sodass die Feder dem Schliesselement auch bei maximaler Auslenkung eine eindeutig definierte Lage vorgibt. Zudem sind vorteilhafterweise die Form des Ventilsitzes sowie die Form der Oberfläche des Schliesselementes, welche an den Ventilsitz zu liegen kommt, derart gegenseitig angepasst ausgestaltet, dass das Schliesselement beim Anschlag an den Ventilsitz zentriert wird. Diese Ausgestaltung weist den Vorteil auf, dass das Schliesselement sowohl in der geschlossenen Position wie auch in der maximal geöffneten Position eine definierte Lage einnimmt, sodass sich das Schliesselement nur noch in der Übergangsphase zwischen diesen beiden Schliessstellungen innerhalb der durch die Feder vorgegebenen Randbedingungen frei bewegen kann. Das Schliesselement weist deshalb keine Flatterbewegung auf, weist einen geringen Verschleiss auf, und weist einen reproduzierbaren Schliesszeitpunkt auf.

Das erfindungsgemässe Poppetventil weist in einer vorteilhaften Ausgestaltung einen Ventilkörper auf, in welchem Einlassteile angeordnet sind, welche zumindest den Einlasskanal und den Ventilsitz ausbilden, wobei diese Einlassteile als Ersatzteile ausgestaltet sind. In einer vorteilhaften Ausgestaltung weist der Ventilkörper Durchbrechungen beziehungsweise Löcher auf, in welchen die Einlassteile angeordnet werden können. Dies ergibt den Vorteil, dass bei einem Verschleiss des Ventilsitzes nicht der ganze Ventilkörper ersetzt werden muss, sondern nur die Einlassteile. Der Ventilkörper kann abhängig von der Anwendung unterschiedlich ausgeformt sein, vorzugsweise deckelförmig oder hohlzylinderförmig, beispielsweise als Teil eines Zylinders, oder in einer sonstigen Form, beispielweise als Teil eines Ventilnestes, das über einen Kanal Fluid leitend mit dem Innenraum eines Zylinders verbunden ist. In einer vorteilhaften Ausgestaltung ist das als Ersatzteil oder Einwegteil vorgesehene Einlassteil derart ausgestaltet, dass dieses eine vorkonfektioniert Baugruppe bildet, welches nebst dem Einlassteil zudem noch die Feder und das Schliesselement umfasst, sodass ein einzelnes Ventil eines mehrere Einzelventile umfassenden Poppetventils rasch ersetzt werden kann, indem ein defektes Einzelventil durch die vorkonfektioniert Baugruppe ersetzt wird.

Das Poppetventil umfassend eine im Eingangskanal des Ventilkörpers angeordnete Feder, an welcher das Schliesselement befestigt ist, weist den weiteren Vorteil auf, dass dieses zum Kompressionsraum hin eine sehr geringe Bautiefe benötigt, weil alle für die Funktion erforderlichen Komponenten in der Bauhöhe des Ventilkörpers angeordnet sind. Dies erlaubt es den Totraum im Kompressor sehr klein zu halten.

In einem weiteren, vorteilhaft ausgestalteten Poppetventil ist unterhalb oder oberhalb des Einlasskanals, vorteilhafterweise ausserhalb und beabstandet zum Ventilsitz zudem eine Längsführung angeordnet, an welcher das Schliesselement in dessen Bewegungsrichtung, beziehungsweise in axialer Richtung geführt ist, um ein allfälliges Verkippen des Schliesselements zusätzlich zu verhindern. Diese Ausführungsform ist insbesondere für Poppetventile geeignet, die eine hohe Strömungsgeschwindigkeit und/oder einen hohen Massendurchsatz aufweisen.

In einem weiteren, vorteilhaft ausgestalteten Poppetventil ist ein Führungsstab vorgesehen, entlang welchem sich das Schliesselement bewegt und durch welchen das Schliesselement geführt ist, wobei die Führung vorzugsweise als Gleitlager ausgestaltet ist. Der Führungsstab verläuft vorzugsweise zumindest entlang eines Teilabschnittes und in einem weiteren Ausführungsbeispiel vollständig innerhalb des Einlasskanals. Eine derartige Längsführung weist den Vorteil auf, dass das Schliesselement im Einlasskanal in einer definierten Ausrichtung geführt ist, ohne zu verkippen. Diese Längsführung weist zudem den Vorteil auf, dass das Schliesselement sehr leicht und massearm ausgestaltet sein kann.

Das Schliesselement ist vorzugsweise derart ausgestaltet, dass die zum Einlasskanal hin ausgerichtete Stirnfläche symmetrisch, vorzugsweise rotationssymmetrisch zur Längsachse ausgestaltet ist und vorzugsweise auch derart angeordnet ist. Diese Ausgestaltung weist den Vorteil auf, dass die Lage des geöffneten Schliesselements durch das über den Einlasskanal einströmende und zwischen Ventilsitz und Schliesselement ausströmende Fluid zentriert wird.

In einer vorteilhaften Ausführungsform könnte der Kolbenkompressor als Membrankompressor ausgestaltet sein.

In einer vorteilhaften Ausführungsform könnte ein Ventil derart ausgestaltet, sein, dass dieses in der Bautiefe des Ventilkörpers Platz finden, und dabei vorzugsweise auf beiden Seiten des Ventilkörpers nicht vorsteht.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: eine Stirnansicht eines geschlossenen Poppetventils;
- Fig. 2: einen perspektivischen Längsschnitt durch das Poppetventil gemäss Fig. 1 entlang der Schnittlinie B-B, wobei die Schliesselemente geöffnet sind;
- Fig. 3: einen perspektivischen Längsschnitt durch ein einziges Schliessventil gemäss Figur 2;
- Fig. 4: einen perspektivischen Längsschnitt eines zweiten Ausführungsbeispiels eines Schliessventils eines Poppetventils;
- Fig. 5: eine Sicht auf die Eingangsöffnung des Schliessventils gemäss Fig. 4;
- Fig. 6: einen perspektivischen Längsschnitt eines dritten Ausführungsbeispiels eines Poppetventils;
- Fig. 7: eine Unteransicht des Poppetventils gemäss Fig. 6;
- Fig. 8: eine Detailansicht des in Fig. 6 und 7 dargestellten Fängers;
- Fig. 9: einen perspektivischen Längsschnitt eines vierten Ausführungsbeispiels eines Schliessventils eines Poppetventils;
- Fig. 10: einen perspektivischen Längsschnitt eines fünften Ausführungsbeispiels eines Schliessventils eines Poppetventils;
- Fig. 11: einen perspektivischen Längsschnitt eines sechsten, nicht zur Erfindung gehörenden Ausführungsbeispiels eines Schliessventils eines Poppetventils;
- Fig. 12: eine Draufsicht auf den Schnitt gemäss Fig. 11
- Fig. 13: ein weiteres, nicht zur Erfindung gehörendes Ausführungsbeispiel einer Feder;
- Fig. 14: ein weiteres, nicht zur Erfindung gehörendes Ausführungsbeispiel einer Feder;
- Fig. 15: ein weiteres, nicht zur Erfindung gehörendes Ausführungsbeispiel einer Feder;
- Fig. 16: ein weiteres Ausführungsbeispiel eines Schliesselementes;
- Fig. 17: ein siebtes Ausführungsbeispiel eines Schliesselementes mit einer Längsführung;
- Fig. 18: das Schliesselement gemäss Figur 17 in eingebautem Zustand;
- Fig. 19: einen perspektivischen Längsschnitt durch ein Poppetventil umfassend Schliesselemente gemäss Figur 17 und 18;
- Fig. 20: einen Längsschnitt durch ein Ausführungsbeispiel eines linear geführten Schliessventils eines Poppetventils;
- Fig. 21: einen Längsschnitt durch ein weiteres Ausführungsbeispiel eines Schliessventils eines Poppetventils;
- Fig. 22: einen Längsschnitt durch ein weiteres Ausführungsbeispiel eines linear geführten Schliessventils eines Poppetventils;
- Fig. 23: ein Poppetventil aufweisend einen zylinderförmigen Ventilkörper mit einer Mehrzahl von Ventilen;
- Fig. 24 bis 26: ein Poppetventil aufweisend einen weitere Ausgestaltungen von Ventilkörpern mit einer Mehrzahl von Ventilen.

Grundsätzlich sind in den Zeichnungen gleiche Teile mit gleichen Bezugszeichen versehen.

### Wege zur Ausführung der Erfindung

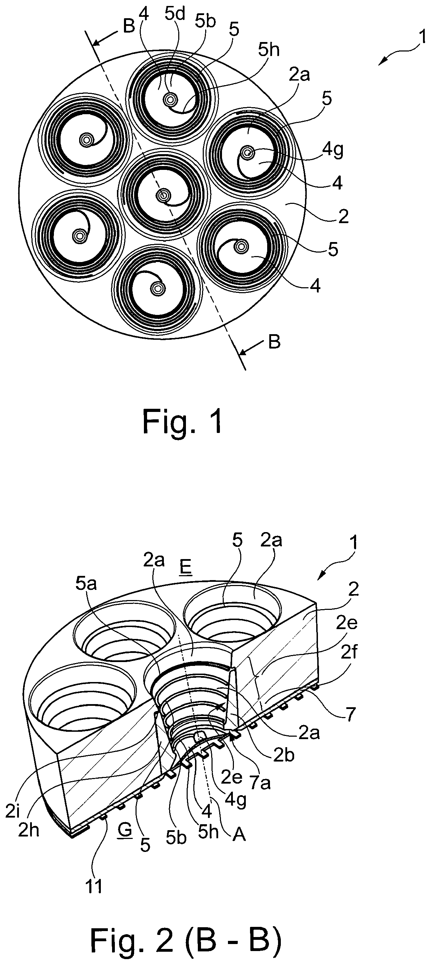

Fig. 1 zeigt eine Stirnansicht eines geschlossenen Poppetventils 1 für einen Kolbenkompressor, umfassend einen als Ventilsitzdeckel 2 ausgestalteten Ventilkörper, in welchem sieben Einlasskanäle 2a angeordnet sind, welche unten durch je ein Schliesselement 4 geöffnet werden können, in der dargestellten Ansicht jedoch verschlossen sind. Im Ventilsitzdeckel 2 sind somit sieben einzelne, identisch ausgestaltete Ventile angeordnet. Die Ventile sind, wie in Figur 2 dargestellt, eingangsseitig vorzugsweise Fluid leitend mit einem gemeinsamen Eingangsraum E verbunden, und sind ausgangsseitig vorzugsweise Fluid leitend mit einem gemeinsamen Ausgangsraum G verbunden. Innerhalb jedes Einlasskanales 2a ist je eine spiralförmig verlaufende Feder 5 angeordnet, welche entlang der Wand des Einlasskanales 2a oder beabstandet zur Wand des Einlasskanals 2a verläuft, und unten einen in die Mitte vorstehenden Übergangsabschnitt 5h aufweist, welcher in einen Halteabschnitt 5d übergeht. Das Schliesselement 4 weist einen zum Beispiel vorstehenden Befestigungsabschnitt 4g auf, mit welchem der Halteabschnitt 5d verbunden ist, sodass das Schliesselement 4 durch die Feder 5 gehalten ist.

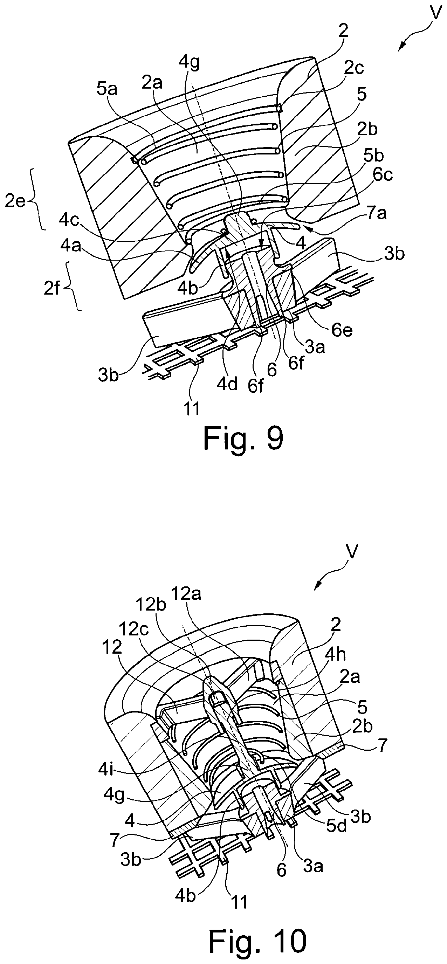

Figur 2 zeigt einen Schnitt entlang der Schnittlinie B-B durch das Poppetventil 1 gemäss Figur 1, wobei die Schliesselemente 4 in geöffnetem Zustand dargestellt sind. Das Poppetventil 1 umfasst zumindest den als Ventilsitzdeckel ausgestalteten Ventilkörper 2 mit Einlasskanälen 2a, sowie die in jedem Einlasskanal 2a angeordnete Feder 5 sowie das jedem Einlasskanal 2a zugeordnete Schliesselement 4, welches in einer axialen Richtung A beweglich durch die Feder 5 gehalten ist. Der Einlasskanal 2a weist einen Eingangsabschnitt 2e auf. Der Einlasskanal 2a weist zudem einen Ausgangsabschnitt 2f, welcher in den Ventilsitz 7a mündet. Der Einlasskanal 2a kann direkt im Ventilsitzdeckel 2 ausgebildet sein, wie beispielsweise in Figur 9 dargestellt. In dem in Figur 2 dargestellten Ausführungsbeispiel weist der Ventilkörper 2 Bohrungen 2h und Absätze 2i auf, wobei jeder Einlasskanal 2a im Wesentlichen, das heisst mit Ausnahme der Eintrittsöffnung zwischen Absatz 2i und Oberfläche des Ventilkörpers 2, durch ein Einlassteil 2b gebildet ist, welches in die entsprechende Bohrungen 2h im Ventilkörper 2 eingesetzt ist und welches vorzugsweise ersetzt werden kann. Das Einlassteil 2b umfasst vorzugsweise auch den Ventilsitz 7a. Unten am Ventilkörper 2 ist eine Halteplatte 7 angeordnet, welche entfernt werden kann, um das Einlassteil 2b zu ersetzen, und welche im montierten Zustand das Einlassteil 2b im Ventilkörper 2 hält.

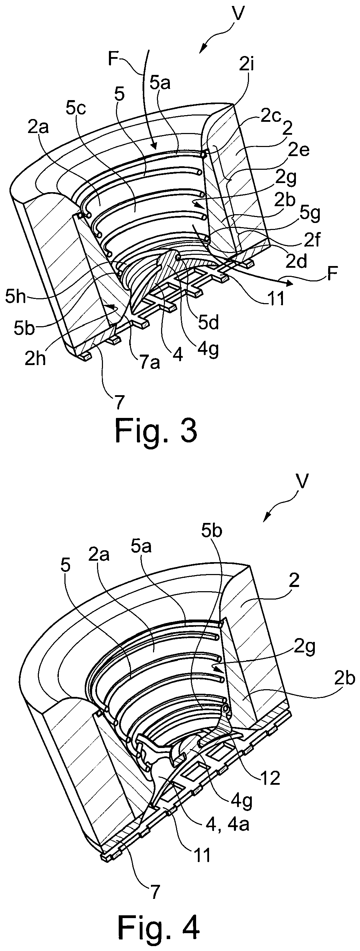

Figur 3 zeigt ein einziges der in den Figuren 1 und 2 dargestellten Ventile im Detail.

Im Ventilsitzdeckel 2 ist der Einlasskanal 2a angeordnet, wobei der Einlasskanal 2a einen Eingangsabschnitt 2e sowie einen Ausgangsabschnitt 2f aufweist, wobei der Ausgangsabschnitt 2f in einen Ventilsitz 7a mündet. Das Schliesselement 4 ist in einer axialen Richtung A beweglich gehalten, wobei das Schliesselement 4 in axialer Richtung A gegenüber liegend dem Ventilsitz 7a angeordnet ist, derart, dass der Ventilsitz 7a durch das Schliesselement 4 verschliessbar ist. Die Feder 5 weist einen ersten Federendabschnitt 5a sowie einen zweiten Federendabschnitt 5b auf, wobei die Feder 5 im Einlasskanal 2a angeordnet ist, wobei der erste Federendabschnitt 5a am Eingangsabschnitt 2e des Einlasskanals 2a anliegt und gehalten ist oder wobei der erste Federendabschnitt 5a zumindest im Bereich der Eintrittsöffnung des Einlasskanals 2a, beispielsweise in einer Vertiefung 2c gehalten ist und ansonsten vorteilhafterweise beabstandet zur Innenseitenwand 2g verläuft, und wobei der zweite Federendabschnitt 5b mit dem Schliesselement 4 verbunden ist, um auf das Schliesselement 4 eine zum Ventilsitz 7a hin ausgerichtete Vorspannkraft zu bewirken.

Vorteilhafterweise weist der Eingangsabschnitt 2e eine in Umfangsrichtung verlaufende Vertiefung 2c auf, vorzugsweise eine Nut, in welche der erste Federendabschnitt 5a eingreift, um den ersten Federendabschnitt 5a am Einlasskanal 2a zu halten und vorzugsweise zu befestigen.

Die Feder 5 weist eine Mehrzahl von Windungen auf, welche schraubenförmig, und vorzugsweise wie dargestellt spiralförmig verlaufend ausgestaltet sind, wobei zumindest einige der Windungen unter Ausbildung eines Zwischenraumes 5c gegenseitig beabstandet sind. Die Feder 5 ist vorteilhafterweise derart ausgestaltet, dass das durchströmende Fluid F nur geringfügig durch die Feder 5 behindert wird, was beispielsweise dadurch erreicht wird, dass die Feder 5 grösstenteils an der Innenseitenwand 2g des Einlassteils 2b anliegt, und dass die Feder 5 im Bereich des Ausgangsabschnittes 2f einen einzigen, in den Innenraum des Einlasskanals 2a vorstehenden Übergangsabschnitt 5h aufweist, welcher in den Halteabschnitt 5d mündet, um das Schliesselement 4 zu halten. Somit ist im Wesentlichen nur der Übergangsabschnitt 5h der Feder 5 beidseitig mit dem Fluid F umströmt. Der an der Innenwand anliegende Federabschnitt ist im Wesentlichen nur auf der dem Innenraum des Einlasskanals 2a zugewandten Seite mit Fluid F beströmt. Die Feder 5 kann jedoch auch beabstandet zur Innenseitenwand 2g angeordnet sein, und somit in den Innenraum des Einlasskanals 2a hineinragen, wobei dies, auf Grund des geringen Drahtdurchmessers der Feder 5, den Strömungswiderstand kaum erhöht.

Vorzugsweise weist die Feder 5, wie dargestellt, in axialer Richtung A zum Ausgangsabschnitt 2f hin einen abnehmenden Aussendurchmesser auf. Vorzugsweise verjüngt sich der Einlasskanal 2a von Eingangsabschnitt 2e zum Ausgangsabschnitt 2f hin. Die Feder 5 besteht vorteilhafterweise aus Metall. Die Feder beziehungsweise der Federdraht weist vorteilhafterweise einen runden, ovalen oder rechteckigen Querschnitt auf, wobei beim rechteckigen Querschnitt die Kanten vorteilhafterweise abgerundet sind.

Besonders bevorzugt, und wie in Figur 3 dargestellt, weist der Einlasskanal 2a eine konisch verlaufende Innenseitenwand 2g auf, sodass der Innendurchmesser des Einlasskanals 2a zum Ausgangsabschnitt 2f hin abnimmt, und die Feder 5 derart spiralförmig verlaufend ausgestaltet ist, dass die Feder 5 bei voll geöffnetem Schliesselement 4 mit mehreren Windungen entlang des Einlasskanals 2a an der Seitenwand 2e anliegt. Dies hat zur Folge, dass Schwingungen der Feder 5, die während des Öffnungsvorgangs des Schliesselementes 4 auftreten können, weil die Windungen während dieser Phase nicht unbedingt am Einlasskanal 2a anliegen, bei voll geöffnetem Schliesselement 4 wieder unterbunden werden. Diese Ausgestaltung weist unter anderem den Vorteil auf, dass die Feder 5 auch ohne umlaufende Vertiefung 2c im Einlasskanal 2a gehalten werden kann, nämlich vorzugsweise nur dadurch, dass die sich zum Ausgangsabschnitt 2f hin verjüngende Feder 5 an der sich konisch verjüngenden Innenseitenwand 2e anliegt.

Der Ventilsitz 7a und das Schliesselement 4 sind, wie in Figur 3 dargestellt, vorzugsweise gegenseitig selbstzentrierend ausgestaltet, indem der Ventilsitz 7a eine konkav oder kegelförmige verlaufende Sitzfläche ausbildet, und indem das Schliesselement 4 einen entsprechend angepassten, konvex oder kegelförmig verlaufenden Schliesskopf 4a aufweist.

Vorteilhafterweise, und wie in Figur 3 dargestellt, weist der Einlasskanal 2a am Ausgangsabschnitt 2f einen in Umfangsrichtung verlaufenden Absatz 2d auf, wobei zudem der zweite Federendabschnitt 5b einen Auflageabschnitt 5g, anschliessend den Übergangsabschnitt 5h und nachfolgend den Halteabschnitt 5d aufweist. Der Halteabschnitt 5d ist mit dem Schliesselement 4 verbunden. Der Auflageabschnitt 5g ist derart ausgestaltet, dass dieser am Absatz 2d anliegen kann, und dass der Übergangsabschnitt 5h derart verläuft, dass das Schliesselement 4 mittig bezüglich dem Ausgangsabschnitt 2f gehalten ist, wenn der Auflageabschnitt 5g am Absatz 2d anliegt. Dadurch ist gewährleistet, dass der Befestigungsabschnitt 4g des Schliesselementes 4, und damit auch das gesamte Schliesselement 4, insbesondere bei maximal geöffnetem Schliesselement 4 in einer definierten Lage gehalten wird. Diese Ausgestaltung weist den Vorteil auf, dass die Lage des Schliesselementes 4 in der geschlossenen Lage durch den Ventilsitz 7a, und in maximal geöffneter Lage durch das Anliegen des Auflageabschnittes 5g am Absatz 2d definiert ist. Die Lage des Schliesselementes 4 ist somit insbesondere bezüglich seitlicher Auslenkung, das heisst senkrecht zur axialen Richtung A, definiert, sodass ein unkontrolliertes Auslenken in diese Richtung verhindert wird. Derartige seitliche Auslenkungen des Schliesselementes 4 sind somit nur noch dann möglich, wenn sich das Schliesselement 4 zwischen der vollständig geschlossenen Position und der vollständig offenen Position befindet.

Wie aus den Figuren 2 und 3 ersichtlich kann unterhalb des Ventilsitzdeckels 2 eine Halteplatte 7 angeordnet sein, die beispielsweise auch als Ventilsitz 7a dienen kann, oder die, wie in den Figuren 2 und 3 dargestellt, nur das Einlassteil 2b im Ventilsitzdeckel 2 fixiert. In einer vorteilhaften Ausgestaltung ist, wie in den Figuren 2 und 3 dargestellt, unterhalb des Ventilsitzdeckels 2 ein gitterförmiges Schutzteil 11 angeordnet, um insbesondere zu vermeiden, dass beschädigte Teile der Feder 5 oder des Schliesselementes 3 in einen unterhalb des Ventilsitzdeckels angeordneten Kompressionsraum des Kolbenkompressors gelangen. Das in den Figuren 1 bis 3 dargestellte Poppetventil 1 weist den Vorteil auf, dass dieses unterhalb des Ventilsitzdeckels kaum Platz erfordert, was den Vorteil ergibt, dass der Totraum des Verdichtungsraums eines Kolbenkompressors klein gehalten werden kann.

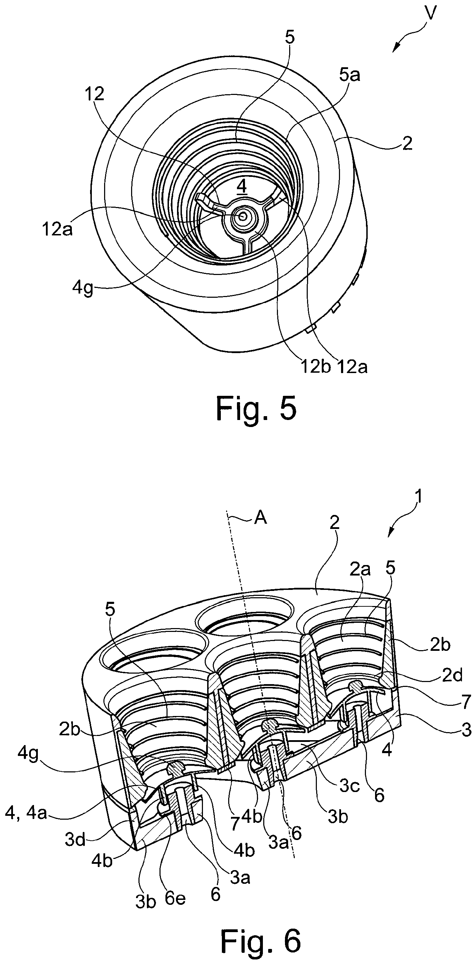

Die Figuren 4 und 5 zeigen ein zweites Ausführungsbeispiel einer Mittenführung des Schliesselementes 4 eines Poppetventils 1. Das Poppetventil 1 umfasst ein Zentrierteil 12 mit eine Mittenhalterung 12b und ausgehend von der Mittenhalterung 12b einer Mehrzahl von Haltearmen 12a, wobei die Haltearme 12a mit dem zweiten Federendabschnitt 5b verbunden sind und die Mittenhalterung 12b und das damit verbundene Schliesselement 4 mittig bezüglich dem Ausgangsabschnitt 2f des Einlasskanals 2a gehalten ist. Die Mittenhalterung 12b ist vorzugsweise, wie in Figur 4 dargestellt, an deren peripherem Endabschnitt mit dem Federendabschnitt 5b verbunden. Die Mittenhalterung 12b weist eine Öffnung auf, in welcher der Befestigungsabschnitt 4g des Schliesselementes 4 gehalten ist. Das Zentrierteil 12 ist somit ein Bestandteil des Schliesselementes 4, sodass der Federendabschnitt 5b mit dem Schliesselement 4 verbunden ist, über das Zentrierteil 12.

Figur 6 zeigt ein drittes Ausführungsbeispiel eines Poppetventils 1 im Schnitt. Im Vergleich zu dem in den Figuren 1 bis 3 dargestellten Poppetventil 1 weist das in Figur 6 dargestellte Poppetventil 1 kein Schutzteil 11 auf, dafür ist unterhalb des Ventilsitzdeckels 2 ein Fänger 3 angeordnet, der Streben 3b, Knoten 3a und Zwischenräume 3c aufweist. An den Knoten 3a sind Führungsteile 6 angeordnet, wobei die Schliesselemente 4 jeweils einen Führungsabschnitt 4b aufweisen, welche das Führungsteil 6 seitlich umschliesst, sodass das Schliesselement 4 in axialer Richtung A am Führungsteil 6 geführt ist. In einer vorteilhaften Ausgestaltung ist das Führungsteil 6 als Clip umfassend einen Anschlag 6e ausgestaltet, sodass das Führungsteil 6 vom Fänger 3 entfernt oder am Fänger 3 befestigt werden kann. Zwischen dem Fänger 3 und dem Ventilsitzdeckel 2 ist eine Halteplatte 7 angeordnet, welche insbesondere zum Halten der Einlassteile 2b dient.

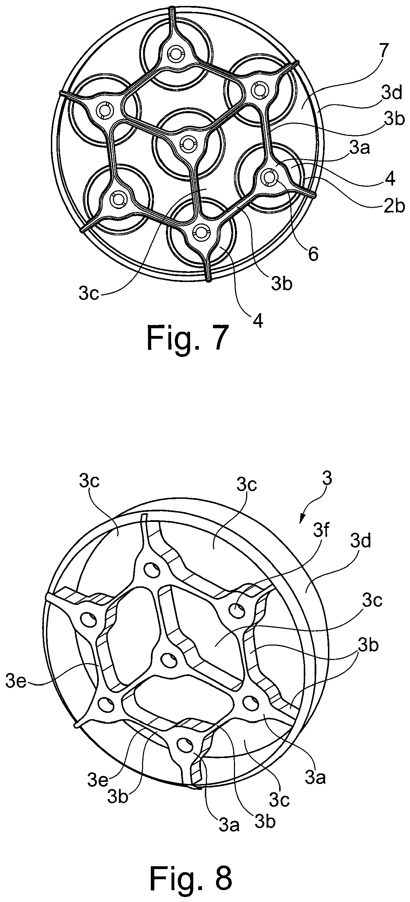

Figur 7 zeigt das in der Figur 6 dargestellte Poppetventil 1 in einer Unteransicht. Figur 8 zeigt den in den Figuren 6 und 7 dargestellten Fänger 3 im Detail. Der Fänger 3 weist vorteilhafterweise eine eben verlaufende Haltestruktur 3e auf, wobei die Haltestruktur 3e vorzugsweise als eine Gitterstruktur ausgestaltet ist, umfassend eine Vielzahl von Streben 3b und Knoten 3a, wobei die Führungsteile 6 an den Knoten 3a angeordnet und vorteilhaferweise austauschbar befestigt sind. Vorteilhafterweise weist der Knoten 3a eine Bohrung 3f auf, in welcher das Führungsteil 6 befestigt ist oder lösbar befestigbar ist. Der dargestellte Fänger 3 weist vorzugsweise grosse Zwischenräume 3c auf, was den Vorteil ergibt, dass das über die Einlasskanäle 2a einströmende Fluid ungehindert oder im Wesentlichen ungehindert durch den Fänger 3 strömen kann, sodass ein nur sehr geringer Druckverlust entsteht. In einer vorteilhaften Ausgestaltung umfasst der Fänger 3 eine hohlzylinderförmige Aussenwand 3d, welche in axialer Richtung A verläuft und welche die Haltestruktur 3e in Umfangsrichtung umschliesst. Der Fänger 3 wirkt somit auch als Ventilschutzanordnung, in Englisch als "valve guard" bezeichnet. Unterhalb des Fängers 3 könnte zudem noch ein wie in den Figuren 2 bis 4 dargestelltes Schutzteil 11 angeordnet sein,

Figur 9 zeigt ein viertes Ausführungsbeispiel eines einzelnen Schliessventils eines Poppetventils 1 im Detail. Im Unterschied zu dem in Figur 6 dargestellten Ausführungsbeispiel ist, dass kein Einlassteil 2b vorgesehen, sodass der Einlasskanal 2a einzig durch den Ventilsitzdeckel 2 ausgebildet ist. Zudem ist keine Halteplatte 7 vorgesehen, sodass das Schliesselement 4 direkt am Ventilsitz 7a des Ventilsitzdeckels 2 anschlägt. Zudem ist unterhalb des Fängers 3 ein Schutzteil 11 angeordnet. Figur 9 zeigt zudem die Wirkungsweise des Führungsteils 6 in Kombination mit dem Schliesselement 4 im Detail. Die Stirnseite 4d sowie die Stirnseite 6c bilden gegenseitig einen Anschlag, was den maximalen Hub des Schliesselementes 4 begrenzt. Das Führungsteil 6 weist im dargestellten Ausführungsbeispiel nebst dem Anschlag 6e zudem noch Einrastteile 6f auf, sodass das Führungsteil 6 über eine Klippverbindung mit dem Fänger 3 verbindbar ist. Die in den Figuren 1 bis 6 und 10 dargestellten Ausführungsbeispiele von Ventilen mit Einlassteilen 2b könnten, wie in Figur 9 dargestellt, auch ohne Einlassteil 2b ausgestaltet sein, indem der Ventilkörper 2 den Einlasskanal 2a und vorzugsweise auch den Ventilsitz 7a ausbilden. Der Ventilsitz 7a könnte in allen Ausführungsformen jedoch auch durch die Halteplatte 7 gebildet sein, welche bis zum Ventilsitz 7a reicht.

Figur 10 zeigt ein fünftes Ausführungsbeispiel eines einzelnen Schliessventils eines Poppetventils 1, das im Unterschied zu dem in Figur 9 dargestellten Ausführungsbeispiel noch ein zusätzliches Zentrierteil 12 aufweist, umfassend Haltearme 12a, sowie eine Halterung 12b mit einer Innenführung 12c, wobei das Schliesselement 4 zudem ein Befestigungsteil 4i umfasst, welches in einem Gleitabschnitt 4h endet. Das Zentrierteil 12 ist im Eingangsabschnitt 2e des Einlasskanals 2a angeordnet, und der Gleitabschnitt 4h ist in der Innenführung 12c in axialer Richtung A gleitend gelagert, sodass das Schliesselement 4 besonders gut und sicher in axialer Richtung A geführt ist. Das Schliesselement 4 ist am Halteabschnitt 5d von der Feder 5 gehalten. Bei dem in Figur 10 dargestellten Ausführungsbeispiel könnte auf das Führungsteil 6, den Fänger 3, sowie den Führungsabschnitt 4b auch verzichtet werden.

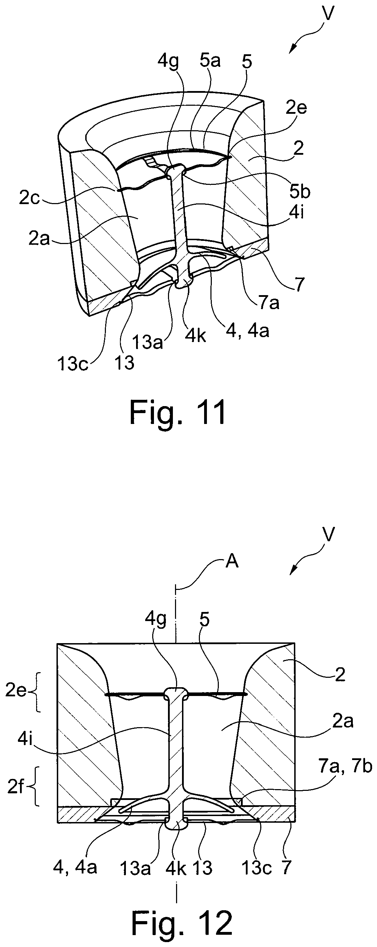

Die Figuren 11 und 12 zeigen ein sechstes Ausführungsbeispiel eines einzelnen Schliessventils eines Poppetventils 1, wobei das Poppetventil 1, wie zum Beispiel in Figur 2 dargestellt, eine Mehrzahl, zum Beispiel sieben solcher Schliessventile umfassen kann. Das in den Figuren 11 und 12 dargestellte Schliessventil umfasst einen Ventilsitzdeckel 2, ein in axialer Richtung A beweglich gelagertes Schliesselement 4, eine Feder 5 sowie eine zweite Feder 13.

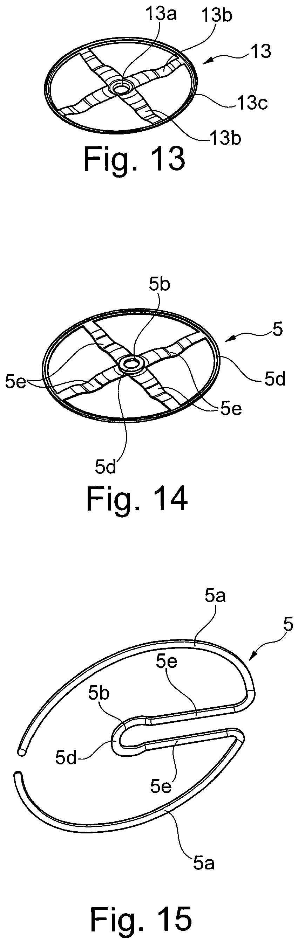

Das Schliesselement 4 umfasst einen Schliesskopf 4a sowie ein in axialer Richtung A verlaufendes Befestigungsteil 4i, wobei das Befestigungsteil 4i einen ersten und einen zweiten in axialer Richtung A beabstandeten Befestigungsabschnitt 4g, 4k aufweist, zwischen welchen der Schliesskopf 4a angeordnet ist. Der erste Befestigungsabschnitt 4g ist im Eingangsabschnitt 2e angeordnet und mit der ersten, als Membranfeder ausgestalteten Feder 5 verbunden, wogegen der zweite Befestigungsabschnitt 4k von einer zweiten, als Membranfeder ausgestalteten Feder 13 gehalten ist, um das Befestigungsteil 4i mittig im Einlasskanal 2a zu halten. Die beiden Federn 13 und 5 sind in den Figuren 13 und 14 im Detail dargestellt. Die Feder 5 umfasst einen ersten Federabschnitt 5a, einen zweiten Federabschnitt 5b sowie eine Mehrzahl dies beiden Abschnitte 5a, 5b verbindende Federarme 5e. Der zweite Federabschnitt 5b bildet zugleich den Halteabschnitt 5d, über welchen der Befestigungsabschnitt 4g gehalten ist. Die zweite Feder 13 umfasst einen ersten Federabschnitt 13c, einen zweiten Federabschnitt 13a sowie eine Mehrzahl dies beiden Abschnitte 13c, 13a verbindende Federarme 13b. Der Ventilsitzdeckel 2 umfasst im Eingangsabschnitt 2e eine umlaufende Nut 2c, in welcher der erste Federabschnitt 5a gehalten ist. Die Halteplatte 7 umfasst ebenfalls eine umlaufende Nut 13c, in welcher die zweite Feder 13 gehalten ist, sodass das von den beiden Federn 5, 13 gehaltene Schliesselement 4 in axialer Richtung A beweglich gelagert ist. Anstelle der Feder 13 könnte zur Führung des Schliesselementes 4 jedoch beispielsweise auch ein Fänger 3 mit Führungsteilen 6 angeordnet sein, wie dieser in den Figuren 6 oder 9 dargestellt ist.

In einem weiteren Ausführungsbeispiel könnte die zweite Feder 13 auch zwischen der ersten Feder 5 und dem Schliesskopf 4a angeordnet sein, sodass, wie aus Figur 11 oder 12 ersichtlich, unterhalb des Schliesskopfes 4a keine zweite Feder 13 angeordnet wäre. Bei dieser Ausführungsform wäre die zweite Feder 13 ebenfalls innerhalb des Eingangskanals 2a angeordnet, und vorzugsweise über eine im Eingangskanal 2a in Umfangsrichtung verlaufende Nut im Eingangskanal 2a gehalten. In einer weiteren Ausführungsform können eine Mehrzahl von Federn 5, 13 vorgesehen sein, um das Schliesselement 4 im Einlasskanal 2a zu halten. So könnten in Figur 11 oder 12 zwischen dem Schliesskopf 4a und der ersten Feder 5 eine, zwei oder noch mehr zusätzliche Membranfedern angeordnet sein und/oder es könnten in den Figuren 11 oder 12 zwischen dem Schliesskopf 4a und der zweiten Feder 13 eine oder mehrere Zusätzliche Membranfedern angeordnet sein, um das Schliesselement federnd im Einlasskanal 2a zu halten.

Die Figuren 11 und 12 zeigen einen Ventilsitz 7a, der als Ventilsitzring 7b ausgestaltet ist, wobei dieser Ventilsitzring 7b in einer Ausnehmung des Ventilsitzdeckels 2 angeordnet ist, und von unten durch die Halteplatte 7 gehalten ist. In einem weiteren Ausführungsbeispiel könnte der Ventilsitz 7a jedoch auch durch die Halteplatte 7 oder durch den Ventilkörper 2 ausgestaltet sein.

Die Federn 5, 13 können auf unterschiedliche Weise ausgestaltet sein. Figur 15 zeigt ein weiteres Ausführungsbeispiel einer Feder 5, welche für das in den Figuren 11 und 12 dargestellte Ventil geeignet ist und einen ersten Federabschnitt 5a sowie einen zweiten Federabschnitt 5b umfasst, wobei die beiden Federabschnitte 5a, 5b über zwei Federarme 5e miteinander verbunden sind. Der Federabschnitt 5b dient als Halteabschnitt 5d, über welche die Feder 5 mit dem Schliesselement 4 verbunden ist. In dem in den Figuren 11 und 12 dargestellten Ausführungsbeispiel können beide Federn 5, 13 wie die in Figur 15 dargestellte Feder 5 ausgestaltet sein.

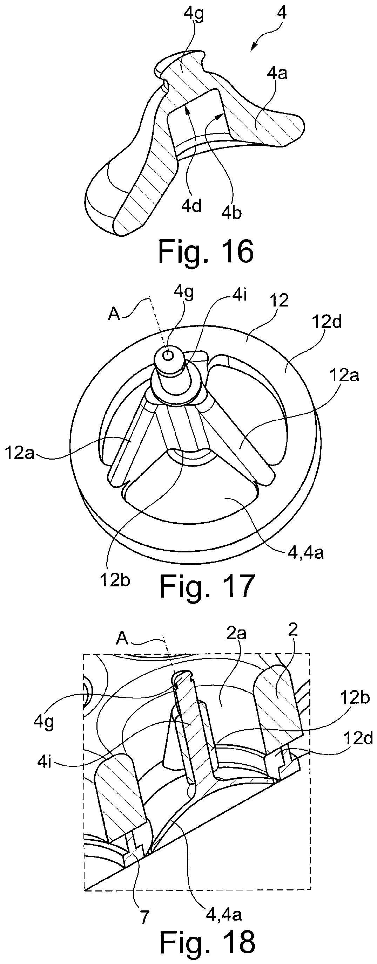

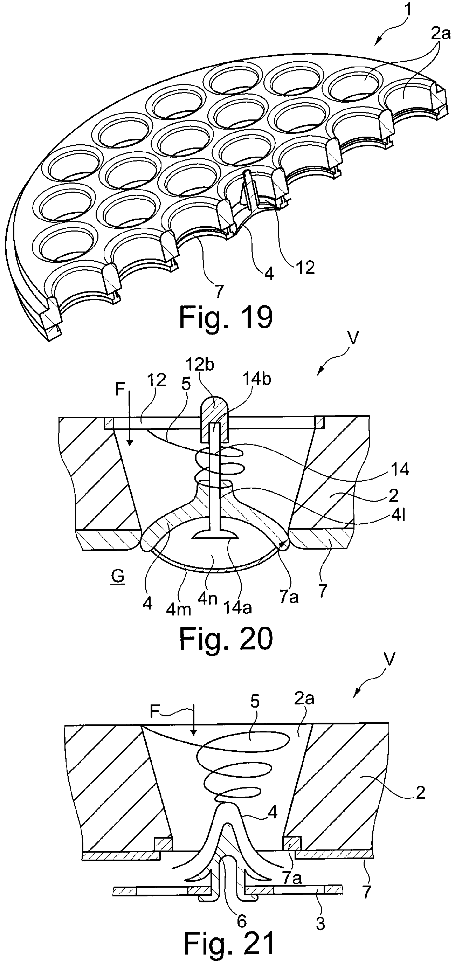

Figur 16 zeigt einen perspektivischen Längsschnitt eines weiteren Ausführungsbeispiels eines Schliesselementes 4 mit Schliesskopf 4a, Befestigungsabschnitt 4g, Führungsabschnitt 4b und Anschlag 4d. Die glockenförmige beziehungsweise pfeilförmige Ausgestaltung ermöglicht einen relativ tiefen Führungsabschnitt 4b innerhalb der Bauhöhe des Schliesselementes 4, wobei dieser Abschnitt, wenn der Schliesskopf 4a am Ventilsitz 7a anliegt, relativ weit in den Innenraum des Einlasskanals 2a hineinragt. Die in Figur 16 dargestellte Ausführungsform des Schliesselementes 4 weist den Vorteil auf, dass der Abstand zwischen Ventilkörper 2 und Fänger 3 klein gehalten werden kann, weil, wie zum Beispiel aus Figur 9 ersichtlich, das Führungsteil 6 sich innerhalb des Schliesselementes 4 ein Stück weit entlang des Einlasskanals 2a erstrecken würde, sodass die Distanz zwischen Ventilkörper 2 und Fänger 3 verringert werden kann, und das Schliesselement4 trotzdem eine Hubbewegung ausführen kann. Figur 19 zeigt in einem perspektivischen Längsschnitt ein weiteres Ausführungsbeispiel eines Poppetventils 1 umfassend einen als Ventilsitzdeckel ausgestalteten Ventilkörper 2 mit einer Vielzahl von Einlasskanälen 2a, sowie umfassend je ein zugeordnetes Schliesselement 4 pro Einlasskanal 2a. Zudem umfasst das Poppetventil 1 eine Halteplatte 7, welche jedes Schliesselement 4 sowie eine Schliesselementzentrierteil 12 am Ventilkörper 2 hält. Beim Poppetventil 1 sind alle Einlasskanäle 2a mit einem Schliesselement 4 mit Schliesselementzentrierteil 12 zu versehen, wobei in Figur 19 zur besseren Darstellung nur ein einziges Schliesselement 4 mit Schliesselementzentrierteil 12 angeordnet ist.

Figur 17 zeigt das Schliesselementzentrierteil 12 im Detail, welches einen Haltering 12d, drei Haltearme 12a sowie eine Schliesselementhalterung 12b umfasst, wobei der Haltering 12d über die drei Haltearme 12a mit der Schliesselementhalterung 12b verbunden ist. Die Schliesselementhalterung 12b umfasse eine in axialer Richtung A verlaufende Bohrung, welches ein Gleitlager für das Befestigungsteil 4i ausbildet.

Figur 18 zeigt in einem perspektivischen Längsschnitt den mittleren Abschnitt des Poppetventils 1 gemäss Figur 19 im Detail. Das Schliesselement 4 umfasst einen Schliesskopf 4a, im dargestellten Beispiel kugelkalottenförmig ausgestaltet, und umfasst das längliche, beispielsweise stabförmig ausgestaltete Befestigungsteil 4i, wobei das längliche Befestigungsteil 4i in einem Befestigungsabschnitt 4g endet. Der Haltering 12d ist zwischen dem Ventilkörper 2 und der Halteplatte 7 fest und vorteilhafterweise lösbar gehalten. Im dargestellten Ausführungsbeispiel bildet der Haltering 12d zudem noch den Ventilsitz 7a aus. Der Ventilsitz 7a könnte jedoch auch durch die Halteplatte 7 oder durch ein zusätzliches Teil ausgebildet sein. Das Schliesselement 4 ist in axialer Richtung A beweglich gelagert, wobei eine nicht dargestellte Feder 5 aufweisend einen ersten Federabschnitt 5a und einen zweiten Federabschnitt 5b eine Rückstellkraft auf den Befestigungsabschnitt 4g ausübt, wobei die Rückstellkraft in der dargestellten Ansicht nach oben wirkt. Der zweite Federabschnitt 5b ist mit dessen Halteabschnitt 5d mit den Befestigungsabschnitt 4g verbunden. Der erste Federabschnitt 5a kann beispielsweise, wie in Figur 3 dargestellt, mit der Seitenwand des Einlasskanals 2a, beispielsweise in einer darin angeordneten Nut 2c oder mit einem Absatz 2d verbunden sein, wobei die Feder 5 als Druckfeder ausgestaltet ist. Der erste Federabschnitt 5a könnte beispielsweise auch am Haltering 12d und/oder an den Haltearmen 12a anliegen oder aufliegen. Die letztgenannte Ausführungsform weist den Vorteil auf, dass der gesamte Schliessmechanismus des Ventils, umfassend das Schliesselement 4, den Ventilsitz 7, sowie das Zentrierteil 12 und die Feder 5 als ersetzbare Einheit ausgestaltet ist, die über den Haltering 12d mit dem Ventilkörper 2 verbindbar ist. Ein solcher Schliessmechanismus ist daher einfach zu ersetzen, und kann zum Beispiel auch als Wegwerfteil ausgestaltet sein.

Figur 20 zeigt einen Längsschnitt durch ein weiteres Ausführungsbeispiel eines einzelnen Ventils V, von dem eine Mehrzahl in einen Ventilkörper 2 wie beispielsweise in Figur 1 dargestellt, angeordnet werden könnte. Der Ventilkörper 2 umfasst einen Einlasskanal 2a. Unten ist am Ventilkörper 2 eine Platte 7 angeordnet, welche auch den Ventilsitz 7a ausbildet. Die Feder 5 und das Schliesselement 4 sind wie in Figur 3 dargestellt angeordnet und ausgestaltet, mit dem Unterschied, dass das Schliesselement 4 oben eine Bohrung 41 aufweist, durch welche ein Führungsstab 14 verläuft, mit einem unteren Anschlag 14a und einer oberen Befestigungsstelle 14b. Der Anschlagstab 14 bildet eine feste Achse, entlang welcher das Schliesselement 4 gleitend in linearer Richtung beweglich gelagert ist, Das Ventil umfasst zudem ein Zentrierteil 12, angeordnet und ausgestaltet wie in Figur 10 dargestellt, jedoch mit dem Unterschied, dass die Zentrierführung 12c ein festes Verbinden der oberen Befestigungsstelle 14b mit der Halterung 12b erlaubt, zum Beispiel indem die Befestigungsstelle 14b ein Aussengewinde und die Halterung 12b ein Innengewinde aufweist. Der Führungsstab 14 wird derart befestigt und angeordnet, dass der untere Anschlag 14a den maximalen Hubweg des Schliesselementes 4 in axialer Richtung A begrenzt. Das Schliesselement 4 umfasst zudem noch eine Abdeckung 4m, welche den Innenraum 4n gegen unten abdichtet, sodass der Innenraum 4n über die Bohrung 41 Fluid leitend mit dem Einlasskanal 2a verbunden ist, ohne dass jedoch der Ausgangsraum G Fluid leitend mit dem Innenraum 4n verbunden ist.

Figur 21 zeigt einen Längsschnitt durch ein weiteres Ausführungsbeispiel eines einzelnen Ventils. Der Ventilkörper 2 umfasst einen Einlasskanal 2a. Unten ist am Ventilkörper 2 eine Platte 7 angeordnet. Das Schliesselement 4 ist trompetenförmig ausgestaltet. Das Schliesselement 4 ist wie in Figur 3 dargestellt gehalten, mit einer Feder 5, welche einerseits mit dem Einlasskanal 2a verbunden ist, und welche andererseits mit dem Schliesselement 4 verbunden ist. Das Ventil umfasst zudem einen Fänger 3, an welchem ein Führungsteil 6 angeordnet ist. Das Führungsteil ist dem Verlauf des Schliesselementes 4 angepasst ausgestaltet, um das Schliesselement 4 bei vollständig geöffnetem Schliesselement 4 in eine definierte Mittenlage zu bringen, und um das Schliesselement 4 während dem Öffnungs- und Schliessungsvorgang bei starken Neigungen teilweise zu führen. Die trompetenförmige Ausgestaltung des Schliesselementes 4 weist den Vorteil auf, dass das durchströmende Fluid F das Schliesselement 4 besonders gut in einer Mittenlage hält.

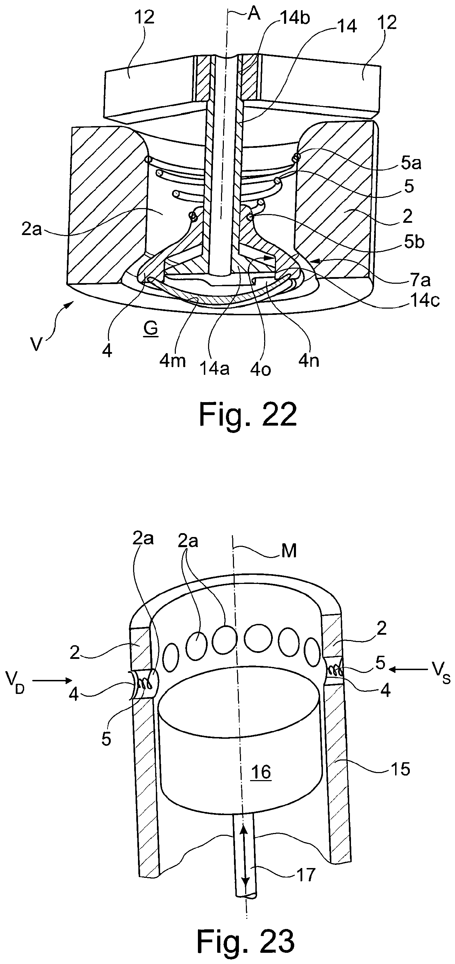

Fig. 22 zeigt einen Längsschnitt durch ein weiteres Ausführungsbeispiel eines Ventils V mit linear geführtem Schliesselement 4. Der Ventilkörper 2 umfasst einen Einlasskanal 2a und bildet im dargestellten Ausführungsbeispiel zudem den Ventilsitz 7a aus. Anschliessend oder auch beabstandet zum Ventilkörper 2 ist ein Zentrierteil 12 angeordnet, mit welchem der Führungsstab 14 über die obere Befestigungsstelle 14b fest verbunden ist, sodass der Führungsstab 14 vorzugsweise mittig durch den Einlasskanal 2a verläuft und fest gehalten ist. Der Führungsstab 14 endet am entgegengesetzten Ende an einem Anschlag 14a, der radial nach Aussen eine zweite Führungsfläche 14c aufweist. Das Schliesselement 4 ist am Führungsstab 14 in linearer Richtung beweglich und am Führungsstab 14 gleitend gelagert und durch den Anschlag 14a sowie den Ventilsitz 7a bezüglich dessen Hubhöhe begrenzt. Das Schliesselement 4 weist zudem einen Innenfläche 4o auf, wobei diese Innenfläche 4o und die zweite Führungsfläche 14c derart gegenseitig angepasst angeordnet und ausgestaltet sind, dass diese eine zusätzliche Führung in axialer Richtung A ausbilden. Die dargestellte Ausgestaltung, bei welcher das Schliesselement 4 direkt am Führungsstab 14 und zusätzlich mit der zweiten Führungsfläche 14c an der Innenfläche 4o geführt wird, weist den Vorteil auf, dass dies eine besonders präzise Linearführung ergibt und/oder das das Schliesselement besonders leicht beziehungsweise mit besonders wenig Masse ausgestaltet werden kann. Auf die zweite Führungsstelle umfassend die zweite Führungsfläche 14c sowie die Innenfläche 4o könnte jedoch auch verzichtet werden. Eine Feder 5 ist am ersten Federendabschnitt 5a mit der Innenwand des Einlasskanals 2a und mit dem zweiten Federendabschnitt 5b mit dem Schliesselement 4 verbunden. Anstelle des dargestellten Zentrierteils 12 könnte auch das in Figur 20 dargestellte Zentrierteil 12 verwendet werden, um den Führungsstab 14 im Einlasskanal 2a zu halten. Bei den Ausführungsbeispielen gemäss Figur 20 und 22 ist das Schliesselement 4 gleitend am Führungsstab 14 gelagert, wogegen im Ausführungsbeispiel gemäss der Figuren 17 und 18 der Führungsstab 4i Teil des Schliesselementes 4 bildet. Die Ausführungsbeispiele gemäss Figur 20 und 22 weisen somit den Vorteil auf, dass das Schliesselement 4 eine geringere bewegte Masse aufweist. Der Anschlag 14a weist eine relativ grosse Fläche auf, was den Vorteil ergibt, dass während dem Betrieb des Ventils V der Verschleiss an Schliesselement 4 und Führungsstab 14 gering ist. Das Schliesselement 4 ist durch eine Abdeckung 4m, eine druckfeste Kalotte verschlossen. Die druckfeste Kalotte ist beispielsweise als ein Blechteil ausgestaltet, welches in das Schliesselement 4 eingeklipst ist. Wobei das Schliesselement 4 vorzugsweise aus einem Kunststoff besteht. Das Zentrierteil 12 bildet vorzugsweise ein Dreibein aus, sodass dieser an drei Stellen gestützt ist, zum Beispiel am Ventilkörper 2 anliegt. Die in Figur 20 dargestellte Ausführungsform ist insbesondere vorteilhaft, wenn dieses als Saugventil verwendet wird, weil dadurch der Schadraum sehr klein gehalten werden kann. In einer vorteilhaften Ausgestaltung ist unterhalb des Ventilkörpers 2 zudem ein Schutzteil 11, beispielsweise ein Schutzgitter angeordnet, um sich allenfalls lösende Teile der Kalotte 4m, des Schliesselementes 4 oder der Feder 5 zurückzuhalten.

Figur 23 zeigt einen Längsschnitt durch einen Kolbenkompressor umfassend einen Zylinder 15, einen Kolben 16, sowie eine Kolbenstange 17, wobei der Kolben 16 in Verlaufsrichtung der Mittenachse M des Zylinders 15 hin und her beweglich gelagert ist. Oben ist anschliessend an den Zylinder 15 ein hohlzylinderförmiger Ventilkörper 2 angeordnet, mit einer Mehrzahl von Ventilen V, welche in Umfangsrichtung gegenseitig beabstandet angeordnet sind. Die einzelnen Ventile V sind beispielsweise wie in Figur 3 dargestellt ausgestaltet, wobei die Halteplatte 7 hohlzylinderförmig ausgestaltet ist und den Zylinder 15 umschliesst. Das Schutzteil 11 ist nicht dargestellt. Dieses könnte die Halteplatte 7 umschliessen. Auf das Schutzteil 11 könnte auch verzichtet werden. Figur 23 zeigt links oben Ventil V, das als ein Druckventil V_{D} angeordnet ist, bei welche die Einlasskanäle 2a an der Innenseite des Zylinders 15 beginnen, sodass die Schliesselemente 4 gegen Aussen angeordnet sind. Die Einlasskanäle 2a verlaufen vorzugsweise radial zur Mittenachse M des Zylinders 15. Die Ventile V können auch umgekehrt angeordnet sein, wie in Figur 23 rechts oben dargestellt, bei dem die Einlasskanäle 2a an der Aussenseite beginnen, und die Schliesselemente 4 gegen die Innenseite des Zylinders 15 hin angeordnet sind, sodass das Ventil V als Saugventil Vs wirkt. Der Ventilkörper 2 könnte auch als Teil des Zylinders 15 ausgestaltet sein, beispielsweise indem der Zylinder 15 Bohrungen aufweist, in welchen beispielsweise je ein Einlassteil 2b mit Feder 5 und Schliesselement 4 angeordnet ist, wie zum Beispiel in Figur 2 dargestellt. Es könnte, wie in Figur 23 oben dargestellt, in Verlaufsrichtung der Mittenachse M zudem unterhalb des Zylinders 15 ein weiterer hohlzylinderförmiger Ventilkörper 2 enthaltend Ventile angeordnet sein, insbesondere falls der Zylinder 15 doppelwirkend ausgestaltet ist. Für die Ventile könnte beispielsweise auch ein Ventil mit linearer Führung des Schliesselementes 4 verwendet werden, wie dies beispielsweise in Figur 20 dargestellt ist. Die Ventile V können im Ventilkörper 2 beziehungsweise im Zylinder 15 je nach Bedarf als Druckventile V_{D} und/oder als Saugventile Vs angeordnet sein. Es besteht eine Vielzahl von Möglichkeiten zur Anordnung der Druckventile V_{D} und der Saugventile Vs. So könnte beispielsweise in Figur 23 jedes zweite der in Umfangsrichtung beabstandet angeordneten Ventile V als Druckventil V_{D} ausgestaltet sein, beziehungsweise jedes zweite als Saugventil Vs, sodass in Umfangsrichtung nacheinander folgend jeweils ein Druckventil V_{D} und nachfolgend ein Saugventil Vs angeordnet ist. In einem weiteren Ausführungsbeispiel könnten alle Druckventile V_{D} oder alle Saugventile Vs in Umfangsrichtung zur Mittenachse M entlang eines vorgegebenen Winkels von beispielsweise 90°, 180° oder 360° angeordnet sein. So könnten in Figur 23 beispielsweise alle Druckventile V_{D} entlang von 180° und nachfolgend alle Saugventile Vs entlang von 180° angeordnet sein, sodass alle Ventile V im Zylinder 15 beziehungsweise im Ventilkörper 2 in Verlaufsrichtung der Mittenachse M auf derselben Höhe angeordnet sind. In einem weiteren Ausführungsbeispiel können die Ventile V auch in Verlaufsrichtung der Mittenachse M versetzt angeordnet sein, sodass beispielsweise die Druckventile V_{D} entlang eines vorgegebenen Winkels von beispielsweise 90°, 180° oder 360° angeordnet sind, und sodass die Saugventile Vs entlang eines vorgegebenen Winkels von beispielsweise 90°, 180° oder 360°, jedoch in Verlaufsrichtung der Mittenachse M versetzt angeordnet sind. Die Druckventile V_{D} und Saugventile Vs könnten auch in Umfangsrichtung nacheinander in Verlaufsrichtung der Mittenachse M versetzt angeordnet sein. Zudem könnten die Druckventile V_{D} und Saugventile Vs in Gruppen angeordnet sein, indem beispielsweise in Umfangsrichtung 2 Ventile V als Druckventile V_{D} und jeweils das dritte Ventil V als Saugventil Vs ausgestaltet ist.

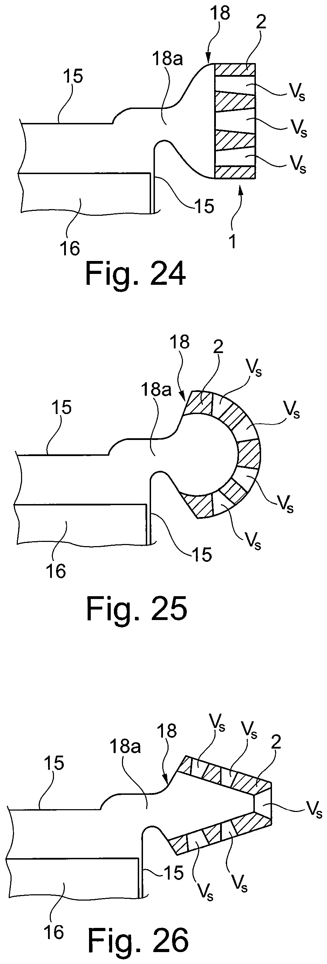

Die Figuren 24 bis 26 zeigen weitere Ausführungsbeispiele von Poppetventils 1 umfassend je einen Ventilkörper 2 mit einer Mehrzahl von daran oder darin angeordneten Saugventilen Vs. Das Poppetventil 1 ist über ein sogenanntes Ventilnest 18 und einen Einlasskanal 18a Fluid leitend mit dem Innenraum gebildet aus einem Zylinder 15 und einem Kolben 16 verbunden. Die Ausführungsbeispiele zeigen nur Saugventile VS. Es könnten jedoch auch nur Druckventile V_{D} angeordnet sein, sodass der Innenraum über einen Auslasskanal 18a und das Ventilnest 18 zum Poppetventil 1 mündet. In den Ausführungsbeispielen gemäss Fig. 24 bis 26 können im Poppetventil 1 beziehungsweise im Ventilkörper 2 sowohl Saugventile VS als auch Druckventile VD angeordnet sein, sodass ein Ein- und Auslasskanal 18a den Zylinderinnenraum mit dem Ventilnest und dem Poppetventil 1 verbindet.

Der Ventilkörper 2 kann in einer Vielzahl von Ausführungsformen ausgestaltet sein, beispielswiese auch kugelförmig, sodass die in Figur 2 und 23 bis 26 dargestellten Ausführungsbeispiele von Ventilkörper 2 nur beispielhaft zu verstehen sind. Ein Vorteil des erfindungsgemässen Poppetventils 1 ist darin zu sehen, dass der Ventilkörper 2 eine Vielzahl von Formen aufweisen kann, in welchem die Ventile V, wie in den Ausführungsbeispielen dargestellt, angeordnet sind. Das erfindungsgemässe Poppetventil 1 kann je nach Erfordernis Saug- oder Druckventil Vs, V_{D} oder eine Kombination der beiden Ventile aufweisen.

## Patentansprüche

1. Poppetventil (1) für einen Kolbenkompressor, umfassend einen Ventilkörper (2) mit einer Mehrzahl von Einlasskanälen (2a), wobei jeder Einlasskanal (2a) einen Eingangsabschnitt (2e) sowie einen Ausgangsabschnitt (2f) aufweist, wobei der Ausgangsabschnitt (2f) in einen Ventilsitz (7a) mündet, wobei jedem Einlasskanal (2a) ein Schliesselement (4) sowie eine Feder (5) zugeordnet ist, wobei das Schliesselement (4) in einer axialen Richtung (A) beweglich ist, und wobei zu jedem Ventilsitz (7a) das zugeordnete Schliesselement (4) in axialer Richtung (A) gegenüber liegend angeordnet ist, derart, dass der Ventilsitz (7a) durch das Schliesselement (4) verschliessbar ist, wobei die Feder (5) einseitig bezüglich des Schliesselementes (4) angeordnet ist, wobei die Feder (5) einen ersten Federendabschnitt (5a) sowie einen zweiten Federendabschnitt (5b) aufweist, wobei die Feder (5) im Einlasskanal (2a) angeordnet ist, die Feder (5) eine Mehrzahl von Windungen aufweist, welche schrauben- oder spiralförmig verlaufend ausgestaltet sind, zumindest einige der Windungen unter Ausbildung eines Zwischenraumes (5c) gegenseitig beabstandet sind, der erste Federendabschnitt (5a) am Einlasskanal (2a) gehalten ist, und der zweite Federendabschnitt (5b) mit dem Schliesselement (4) verbunden ist, um auf das Schliesselement (4) eine zum Ventilsitz (7a) hin ausgerichtete Vorspannkraft zu bewirken.

2. Poppetventil nach Anspruch 1, **dadurch gekennzeichnet, dass** der Ventilkörper (2) deckelförmig ausgestaltet ist.

3. Poppetventil nach Anspruch 1, **dadurch gekennzeichnet, dass** der Ventilkörper (2) sich in Umfangsrichtung um eine Mittenachse (M) erstreckt und bezüglich der Mittenachse (M) hohlzylinderförmig ausgestaltet ist.

4. Poppetventil nach einem der Ansprüche 1 bis 3, **dadurch gekennzeichnet, dass** der erste Federendabschnitt (5a) am Eingangsabschnitt (2e) des Einlasskanals (2a) anliegt und gehalten ist.

5. Poppetventil nach einem der Ansprüche 1 bis 3, **dadurch gekennzeichnet, dass** ein Zentrierteil (12) in den Einlasskanal (2a) vorsteht, und dass der erste Federendabschnitt (5a) am Zentrierteil (12) anliegt und gehalten ist.

6. Poppetventil nach Anspruch 5, **dadurch gekennzeichnet, dass** der Eingangsabschnitt (2e) eine in Umfangsrichtung verlaufende Vertiefung (2c) aufweist, in welche der erste Federendabschnitt (5a) eingreift, um den erste Federendabschnitt (5a) am Einlasskanal (2a) zu halten.

7. Poppetventil nach einem der vorhergehenden Ansprüche, **dadurch gekennzeichnet, dass** die Feder (5) in axialer Richtung (A) zum Ausgangsabschnitt (2f) hin einen abnehmenden Aussendurchmesser aufweist, und dass sich der Einlasskanal (2a) von Eingangsabschnitt (2e) zum Ausgangsabschnitt (2f) hin verjüngt.

8. Poppetventil nach Anspruch 7, **dadurch gekennzeichnet, dass** der Einlasskanal (2a) eine konisch verlaufende Innenseitenwand (2e) aufweist und der Innendurchmesser des Einlasskanals (2a) zum Ausgangsabschnitt (2f) hin abnimmt, und dass die Feder (5) derart spiralförmig verlaufend ausgestaltet ist, dass die Feder (5) mit mehreren Windungen entlang des Einlasskanals (2a) an der Seitenwand (2e) anliegt.

9. Poppetventil nach einem der vorhergehenden Ansprüche, **dadurch gekennzeichnet, dass** der Ventilsitz (7a) und das Schliesselement (4) gegenseitig selbstzentrierend ausgestaltet sind, indem der Ventilsitz (7a) eine konkav oder kegelförmig verlaufende Sitzfläche aufweist, und indem das Schliesselement (4) einen entsprechend angepassten, konvex oder kegelförmig verlaufenden Schliesskopf (4a) aufweist.

10. Poppetventil nach einem der vorhergehenden Ansprüche, **dadurch gekennzeichnet, dass** der Einlasskanal (2a) am Ausgangsabschnitt (2f) einen in Umfangsrichtung verlaufenden Absatz (2d) aufweist, dass der zweite Federendabschnitt (5b) einen Auflageabschnitt (5g), anschliessend einen Übergangsabschnitt (5h) und nachfolgend einen Halteabschnitt (5d) aufweist, dass der Halteabschnitt (5d) mit dem Schliesselement (4) verbunden ist, dass der Auflageabschnitt (5g) derart ausgestaltet ist, dass dieser am Absatz (2d) anliegen kann, und dass der Übergangsabschnitt (5h) derart verläuft, dass das Schliesselement (4) mittig bezüglich dem Ausgangsabschnitt (2f) gehalten ist, wenn der Auflageabschnitt (5g) am Absatz (2d) anliegt.

11. Poppetventil nach einem der Ansprüche 1 bis 9, **dadurch gekennzeichnet, dass** ein Zentrierteil (12) eine Mittenhalterung (12b) und ausgehend von der Mittenhalterung (12b) eine Mehrzahl von Haltearmen (12a) umfasst, wobei die Haltearme (12a) mit dem zweiten Federendabschnitt (5b) verbunden sind und die Mittenhalterung (12b) und das damit verbundene Schliesselement (4) mittig bezüglich dem Ausgangsabschnitt (2f) des Einlasskanals (2a) halten.

12. Poppetventil nach einem der Ansprüche 1 bis 11, umfassend einen Fänger (3), wobei der Fänger (3) in axialer Richtung (A) nachfolgend dem Ventilkörper 2 und dem Schliesselement (4) angeordnet ist, wobei im Fänger (3) ein in axialer Richtung (A) verlaufendes Führungsteil (6) angeordnet ist, an welchem das Schliesselement (4) in axialer Richtung (A) gleitend gelagert ist.

13. Poppetventil nach Anspruch 12, **dadurch gekennzeichnet, dass** der Fänger (3) eine flächig verlaufende Haltestruktur (3e) aufweist, an welcher die Führungsteile (6) in axialer Richtung (A) vorstehend angeordnet sind, wobei die Haltestruktur (3e) Zwischenräume (3c) aufweist, wobei die Haltestruktur (3e) insbesondere als eine Gitterstruktur ausgestaltet ist, umfassend eine Vielzahl von Streben (3b) und Knoten (3a) sowie Zwischenräumen (3c).

14. Poppetventil nach einem der vorhergehenden Ansprüche, **dadurch gekennzeichnet, dass** der Ventilsitz (7a) als ein separater Ventilsitzring (7b) ausgestaltet ist, welcher im Ventilkörper (2) angeordnet ist.

15. Poppetventil nach einem der vorhergehenden Ansprüche, **dadurch gekennzeichnet, dass** im Ventilkörper (2) eine Mehrzahl von Einlassteilen (2b) angeordnet sind, welche lösbar und austauschbar mit dem Ventilkörper (2) verbunden ist, wobei jedes Einlassteil (2b) den Einlasskanal (2a) umfasst.

16. Poppetventil nach Anspruch 15, **dadurch gekennzeichnet, dass** der Ventilsitz (7a) Teil des Einlassteils (2b) ist, oder dass das Einlassteil (2b) eine Nut aufweist, in welcher der Ventilsitz (7a) angeordnet ist.

17. Poppetventil nach Anspruch 5, **dadurch gekennzeichnet, dass** das Zentrierteil (12) eine in Richtung der Achse (A) verlaufende Linearführung (12b) umfasst, und dass das Schliesselement (4) einen stabförmigen Befestigungsabschnitt (4g) umfasst, welcher in der Linearführung (12b) in Richtung der Achse (A) beweglich gelagert ist.

18. Poppetventil nach einem der vorhergehenden Ansprüche, **dadurch gekennzeichnet, dass** in demselben Ventilkörper (2) die Einlasskanäle (2a), die Ventilsitze (7a) und die Schliesselemente (4) derart angeordnet sind, dass der Ventilkörper (2) sowohl ein Saugventil (Vs) als auch ein Druckventil (Vp) umfasst.

19. Kolbenkompressor umfassend ein Poppetventil (1) nach einem der vorhergehenden Ansprüche.

## Claims

1. A poppet valve (1) for a piston compressor, comprising a valve body (2) with a multiplicity of inlet ducts (2a), wherein each inlet duct (2a) has an entrance section (2e) and an exit section (2f), wherein the exit section (2f) opens into a valve seat (7a), wherein each inlet duct (2a) is assigned a closing element (4) and a spring (5), wherein the closing element (4) is movable in an axial direction (A), and wherein, in relation to each valve seat (7a), the associated closing element (4) is arranged so as to be situated opposite in the axial direction (A), in such a way that the valve seat (7a) is closable by the closing element (4), wherein the spring (5) is arranged on one side in relation to the closing element (4), wherein the spring (5) has a first spring end section (5a) and a second spring end section (5b), wherein the spring (5) is arranged in the inlet duct (2a), wherein the spring (5) has a multiplicity of windings which are designed to extend in helical or spiral-shaped fashion, and wherein at least some of the windings are spaced apart from one another so as to form an intermediate space (5c), wherein the first spring end section (5a) is held on the inlet duct (2a), and wherein the second spring end section (5b) is connected to the closing element (4) in order to subject the closing element (4) to a preload force directed toward the valve seat (7a).

2. The poppet valve as claimed in claim 1, **characterized in that** the valve body (2) is designed as a valve seat cover.

3. The poppet valve as claimed in claim 1, **characterized in that** the valve body (2) extends in a circumferential direction about a central axis (M) and is of hollow cylindrical design with respect to the central axis (M).

4. The poppet valve as claimed in one of claims 1 to 3, **characterized in that** the first spring end section (5a) bears against and is held on the entrance section (2e) of the inlet duct (2a).

5. The poppet valve as claimed in one of claims 1 to 3, **characterized in that** a centering part (12) projects into the inlet duct (2a), and **in that** the first spring end section (5a) bears against and is held on the centering part (12).

6. The poppet valve as claimed in claim 5, **characterized in that** the entrance section (2e) has a depression (2c) which extends in the circumferential direction and into which the first spring end section (5a) engages in order to hold the first spring end section (5a) on the inlet duct (2a).

7. The poppet valve as claimed in one of the preceding claims, **characterized in that** the spring (5) has an external diameter which decreases in the axial direction (A) toward the exit section (2f), and **in that** the inlet duct (2a) narrows from the entrance section (2e) toward the exit section (2f) .

8. The poppet valve as claimed in claim 7, **characterized in that** the inlet duct (2a) has a conically extending inner side wall (2e), and the internal diameter of the inlet duct (2a) decreases toward the exit section (2f), and **in that** the spring (5) is designed to extend in spiral-shaped fashion such that the spring (5) bears with multiple windings along the inlet duct (2a) against the side wall (2e).

9. The poppet valve as claimed in one of the preceding claims, **characterized in that** the valve seat (7a) and the closing element (4) are of mutually self-centering design by virtue of the valve seat (7a) having a concavely or conically extending seat surface and by virtue of the closing element (4) having a correspondingly adapted, convexly or conically extending closing head (4a).

10. The poppet valve as claimed in one of the preceding claims, **characterized in that** the inlet duct (2a) has, at the exit section (2f), a shoulder (2d) extending in the circumferential direction, **in that** the second spring end section (5b) has a support section (5g), followed by a transition section (5h) and subsequently a holding section (5d), **in that** the holding section (5d) is connected to the closing element (4), **in that** the support section (5g) is designed such that it can bear against the shoulder (2d), and **in that** the transition section (5h) extends such that the closing element (4) is held centrally relative to the exit section (2f) when the support section (5g) bears against the shoulder (2d).

11. The poppet valve as claimed in one of claims 1 to 9, **characterized in that** a centering part (12) comprises a central holder (12b) and, proceeding from the central holder (12b), a multiplicity of holding arms (12a), wherein the holding arms (12a) are connected to the second spring end section (5b) and hold the central holder (12b), and the closing element (4) connected thereto, centrally relative to the exit section (2f) of the inlet duct (2a).

12. The poppet valve as claimed in one of claims 1 to 11, comprising a cage (3), wherein the cage (3) is arranged so as to follow the valve body (2) and the closing element (4) in the axial direction (A), wherein, in the cage (3), there is arranged a guide part (6) which extends in the axial direction (A) and on which the closing element (4) is mounted slidingly in the axial direction (A).

13. The poppet valve as claimed in claim 12, **characterized in that** the cage (3) has an areally extending holding structure (3e) on which the guide parts (6) are arranged so as to project in the axial direction (A), wherein the holding structure (3e) has intermediate spaces (3c), wherein the holding structure (3e) is designed in particular as a grid structure comprising a multiplicity of struts (3b) and junctions (3a) and intermediate spaces (3c).

14. The poppet valve as claimed in one of the preceding claims, **characterized in that** the valve seat (7a) is designed as a separate valve seat ring (7b) which is arranged in the valve body (2).

15. The poppet valve as claimed in one of the preceding claims, **characterized in that**, in the valve body (2), there are arranged a multiplicity of inlet parts (2b) which are connected detachably and exchangeably to the valve body (2), wherein each inlet part (2b) surrounds the inlet duct (2a) .

16. The poppet valve as claimed in claim 15, **characterized in that** the valve seat (7a) is part of the inlet part (2b), or **in that** the inlet part (2b) has a groove in which the valve seat (7a) is arranged.

17. The poppet valve as claimed in claim 5, **characterized in that** the centering part (12) comprises a linear guide (12b) which extends in the direction of the axis (A), and **in that** the closing element (4) comprises a rod-shaped fastening section (4g) which is mounted in the linear guide (12b) movably in the direction of the axis (A).

18. The poppet valve as claimed in one of the preceding claims, **characterized in that** the inlet ducts (2a), the valve seats (7a) and the closing elements (4) are arranged in the same valve body (2) such that the valve body (2) comprises both a suction valve (V_{S}) and a pressure valve (V_{D}).

19. A piston compressor comprising a poppet valve (1) as claimed in one of the preceding claims.

## Revendications

1. Soupape à champignon (1) destinée à un compresseur à piston, la soupape à champignon comprenant un corps (2) pourvu d'une pluralité de conduits d'entrée (2a), chaque conduit d'entrée (2a) comportant une partie d'entrée (2e) et une partie de sortie (2f), la partie de sortie (2f) débouchant dans un siège de soupape (7a), chaque conduit d'entrée (2a) étant associé à un élément de fermeture (4) et à un ressort (5), l'élément de fermeture (4) étant mobile dans une direction axiale (A), et l'élément de fermeture associé (4) étant disposé en face de chaque siège de soupape (7a) dans la direction axiale (A) de sorte que le siège de soupape (7a) puisse être fermé par l'élément de fermeture (4), le ressort (5) étant disposé d'un côté par rapport à l'élément de fermeture (4), le ressort (5) comportant une première partie d'extrémité (5a) et une deuxième partie d'extrémité (5b), le ressort (5) étant disposé dans le conduit d'entrée (2a), le ressort (5) comportant une pluralité d'enroulements qui sont conçus de manière à s'étendre en spirale ou en hélice, au moins certains des enroulements étant espacés les uns des autres pour former un espace intermédiaire (5c), la première partie d'extrémité (5a) étant maintenue sur le conduit d'entrée (2a) et la deuxième partie d'extrémité (5b) étant reliée à l'élément de fermeture (4) pour exercer sur l'élément de fermeture (4) une force de rappel dirigée vers le siège de soupape (7a).

2. Soupape à champignon selon la revendication 1, **caractérisée en ce que** le corps (2) de la soupape est conçu en forme de couvercle.

3. Soupape à champignon selon la revendication 1, **caractérisée en ce que** le corps (2) de la soupape s'étend dans la direction circonférentielle autour d'un axe central (M) et est conçu comme un cylindre creux par rapport à l'axe central (M).

4. Soupape à champignon selon l'une des revendications 1 à 3, **caractérisée en ce que** la première partie d'extrémité (5a) vient en appui et est maintenue sur la partie d'entrée (2e) du conduit d'entrée (2a).

5. Soupape à champignon selon l'une des revendications 1 à 3, **caractérisée en ce qu'**un élément de centrage (12) fait saillie dans le conduit d'entrée (2a) et **en ce que** la première partie d'extrémité (5a) vient en appui et est maintenue sur l'élément de centrage (12).

6. Soupape à champignon selon la revendication 5, **caractérisée en ce que** la partie d'entrée (2e) comporte un évidement (2c) qui s'étend de manière circonférentielle et dans lequel la première partie d'extrémité (5a) s'engage pour maintenir la première partie d'extrémité (5a) sur le conduit d'entrée (2a).

7. Soupape à champignon selon l'une des revendications précédentes, **caractérisé en ce que** le ressort (5) a un diamètre extérieur décroissant en direction de la partie de sortie (2f) dans la direction axiale (A), et **en ce que** le conduit d'entrée (2a) s'amincit depuis la partie d'entrée (2e) en direction la partie de sortie (2f).

8. Soupape à champignon selon la revendication 7, **caractérisée en ce que** le conduit d'entrée (2a) comporte une paroi latérale intérieure conique (2e) et **en ce que** le diamètre intérieur du conduit d'entrée (2a) diminue en direction de la partie de sortie (2f), et **en ce que** le ressort (5) est conçue de manière à s'étendre en spirale de sorte que le ressort (5) vient en appui sur la paroi latérale (2e) au niveau d'une pluralité d'enroulements le long du conduit d'entrée (2a) .

9. Soupape à champignon selon l'une des revendications précédentes, **caractérisée en ce que** le siège de soupape (7a) et l'élément de fermeture (4) sont conçus pour être autocentrés l'un par rapport à l'autre car le siège de soupape (7a) présente une surface de siège concave ou conique et l'élément de fermeture (4) comporte une tête de fermeture (4a) adaptée de manière correspondante et s'étendant de manière convexe ou conique.

10. Soupape à champignon selon l'une des revendications précédentes, **caractérisée en ce que** le conduit d'entrée (2a) comporte au niveau de la partie de sortie (2f) un épaulement (2d) qui s'étend de manière circonférentielle, **en ce que** la deuxième partie d'extrémité (5b) comporte une partie d'appui (5g), puis une partie de transition (5h) et ensuite une partie de retenue (5d), **en ce que** la partie de retenue (5d) est reliée à l'élément de fermeture (4), **en ce que** la partie d'appui (5g) est conçue de manière à pouvoir venir en appui sur l'épaulement (2d) et **en ce que** la partie de transition (5h) s'étend de telle sorte que l'élément de fermeture (4) est maintenu au milieu par rapport à la partie de sortie (2f) lorsque la partie d'appui (5g) vient en appui sur l'épaulement (2d).

11. Soupape à champignon selon l'une des revendications 1 à 9, **caractérisée en ce qu'**un élément de centrage (12) comprend un support central (12b) et, à partir du support central (12b), une pluralité de bras de retenue (12a), les bras de support (12a) étant reliés à la deuxième partie d'extrémité (5b) et maintenant le support central (12b) et l'élément de fermeture (4), relié à celui-ci, de manière centrale par rapport à la partie de sortie (2f) du conduit d'entrée (2a).

12. Soupape à champignon selon l'une des revendications 1 à 11, comprenant un piège (3), le piège (3) étant disposé en aval du corps de soupape (2) et de l'élément de fermeture (4) dans la direction axiale (A), un élément de guidage (6), qui s'étend dans la direction axiale (A) et sur lequel l'élément de fermeture (4) est monté de manière coulissante dans la direction axiale (A), étant disposé sur le receveur (3) .

13. Soupape à champignon selon la revendication 12, **caractérisée en ce que** le piège (3) comporte une structure de retenue (3e) sensiblement bidimensionnelle sur laquelle les éléments de guidage (6) sont disposés en saillie dans la direction axiale (A), la structure de retenue (3e) comportant des espaces intermédiaires (3c), la structure de retenue (3e) étant configurée notamment comme une structure en treillis comprenant une pluralité d'entretoises (3b) et de noeuds (3a) ainsi que des espaces intermédiaires (3c).

14. Soupape à champignon selon l'une des revendications précédentes, **caractérisée en ce que** le siège de soupape (7a) est conçu comme une bague séparée (7b) qui est disposée dans le corps de soupape (2).

15. Soupape à champignon selon l'une des revendications précédentes, **caractérisée en ce qu'**une pluralité d'éléments d'entrée (2b) sont disposés dans le corps de soupape (2), lesquels sont reliés de manière amovible et remplaçable au corps de soupape (2), chaque partie d'entrée (2b) comprenant le conduit d'entrée (2a).

16. Soupape à champignon selon la revendication 15, **caractérisée en ce que** le siège de soupape (7a) fait partie de la partie d'entrée (2b) ou **en ce que** la partie d'entrée (2b) comporte une gorge dans laquelle le siège de soupape (7a) est disposé.

17. Soupape à champignon selon la revendication 5, **caractérisée en ce que** l'élément de centrage (12) comporte un guidage linéaire (12b) qui s'étend en direction de l'axe (A) et **en ce que** l'élément de fermeture (4) comporte une partie de fixation (4g) en forme de tige qui est montée dans le guide linéaire (12b) de manière mobile dans la direction de l'axe (A).

18. Soupape à champignon selon l'une des revendications précédentes, **caractérisée en ce que** les conduits d'entrée (2a), les sièges de soupape (7a) et les éléments de fermeture (4) sont disposés dans le même corps de soupape (2) de telle sorte que le corps de soupape (2) comporte une soupape d'aspiration (Vₛ) ainsi qu'une soupape de pression (Vₚ).

19. Compresseur à piston comprenant une soupape à champignon (1) selon l'une des revendications précédentes.
